# FASCICULE DE BREVET EUROPEEN

(11) **EP 0 615 889 B1**
(45) Date de publication et mention de la délivrance du brevet: **03.09.1997**
(21) Numéro de dépôt: 94400549.5
(22) Date de dépôt: 14.03.1994
(51) Int. Cl.: B60R 21/20, B60R 21/26

(54) **Ensemble de colonne de direction notamment pour véhicule automobile**
Lenkradanordnung, insbesondere für Kraftfahrzeuge
Steering column assembly, in particular for an automotive vehicle

(30) Priorité: 18.03.1993 FR 9303160
(43) Date de publication de la demande: 21.09.1994
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR)
(74) Mandataire: Habasque, Etienne Joel Jean-François

(56) Documents cités:
- FR-A- 2 061 717
- FR-A- 2 141 336
- GB-A- 1 367 132

## Description

La présente invention concerne un ensemble de colonne de direction notamment pour véhicule automobile.

On connaît déjà dans l'état de la technique un certain nombre d'ensembles de colonne de direction, qui comportent un corps de colonne dans lequel est disposé un arbre tubulaire de direction, dont une extrémité est adaptée pour être reliée au reste du mécanisme de direction du véhicule et dont une autre extrémité est adaptée pour recevoir un volant de direction.

Il est de plus en plus fréquent d'intégrer des modules à sac gonflable dans les coussins centraux de ces volants pour assurer la protection des conducteurs des véhicules en cas de choc.

Ces modules à sac gonflable comprennent généralement un sac associé à un générateur de gaz de gonflage de celui-ci dont le fonctionnement est contrôlé par un détonateur.

On rencontre généralement dans les véhicules automobiles, deux grands types de coussins centraux de volant, à savoir les coussins fixés sur les volants ou sur les arbres de direction, qui tournent donc avec ceux-ci et les coussins fixés sur des tubes de support s'étendant dans les arbres de direction, ces tubes étant bloqués en rotation et les coussins étant alors stationnaires par rapport aux volants lorsque ceux-ci tournent.

L'intégration des modules à sac gonflable dans les coussins présente un certain nombre d'inconvénients, notamment au niveau de la masse et du moment d'inertie extrêmement importants de ceux-ci, de la fréquence propre de l'ensemble de colonne qui est dégradée par le montage en porte-à-faux de cette masse, mais également de l'encombrement de ces modules, ce qui se traduit par des coussins présentant un encombrement important et donc des caractéristiques esthétiques discutables.

Ceci est par exemple le cas de l'ensemble décrit dans le document FR-A-2 061 717 qui concerne un ensemble conforme au préambule de la revendication 1.

Le but de l'invention est donc de résoudre ces problèmes.

A cet effet, l'invention a pour objet un ensemble de colonne de direction, notamment pour véhicule automobile, du type comportant un corps de colonne dans lequel est disposé un arbre tubulaire de direction dont une extrémité est adaptée pour être reliée au reste du mécanisme de direction du véhicule et dont l'autre extrémité est adaptée pour recevoir un volant de direction, et un module à sac gonflable comprenant un sac gonflable disposé dans un coussin central de volant et associé à un générateur de gaz de gonflage de ce sac, caractérisé en ce que le module à sac gonflable est divisé en deux parties, dont l'une comporte le sac et est disposée dans le coussin central et dont l'autre comporte le générateur de gaz et est logée dans l'ensemble de colonne, à proximité de l'extrémité de celui-ci adaptée pour être reliée au reste du mécanisme de direction du véhicule et en ce que les deux parties du module sont raccordées l'une à l'autre par l'intermédiaire d'un organe tubulaire de l'ensemble de colonne de direction.

Selon un mode de réalisation, le coussin central est porté par l'arbre de direction et l'organe tubulaire et formé par cet arbre de direction.

Selon un autre mode de réalisation, le coussin central est porté par un tube de support stationnaire, disposé dans l'arbre de direction et l'organe tubulaire est formé par ce tube de support du coussin.

L'invention sera mieux comprise à l'aide de la description qui va suivre, donnée uniquement à titre d'exemple et faite en se référant aux dessins annexés, sur lesquels :
- la Fig.1 représente une vue en coupe schématique d'un premier mode de réalisation d'un ensemble de colonne de direction selon l'invention, dans lequel le volant et le coussin central sont portés par un arbre de direction;
- la Fig.2 représente une vue en coupe schématique d'un second mode de réalisation d'un ensemble de colonne de direction selon l'invention, dans lequel le volant et le coussin central sont également portés par l'arbre de direction; et
- la Fig.3 représente une vue en coupe schématique d'un troisième mode de réalisation d'un ensemble de colonne de direction selon l'invention, dans lequel le volant de direction est porté par un arbre de direction et le coussin central est porté par un tube de support stationnaire s'étendant dans cet arbre.

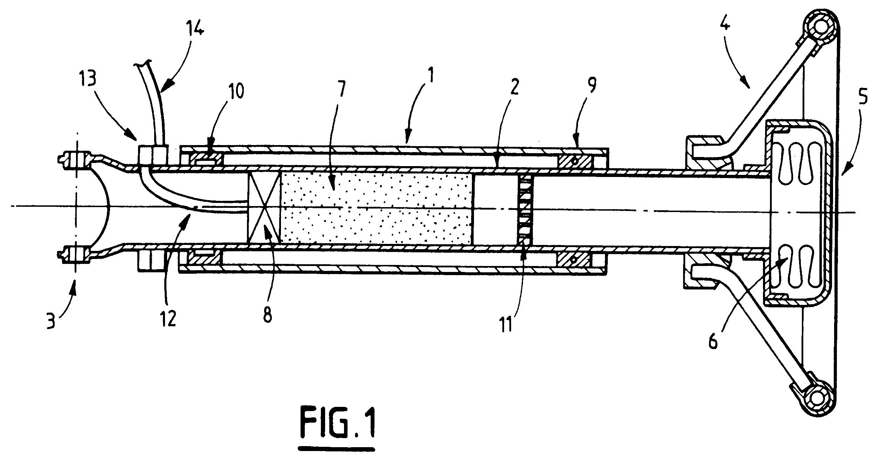

Ainsi qu'on peut le voir sur la Fig.1, un ensemble de colonne de direction selon l'invention comporte un corps de colonne désigné par la référence générale 1 sur cette figure, dans lequel est disposé un arbre de direction tubulaire désigné par la référence générale 2.

La structure de fixation de cet ensemble sur un véhicule automobile étant bien connue dans l'état de la technique, on ne la décrira donc pas plus en détail.

L'une des extrémités de l'arbre de direction est adaptée pour être reliée en 3, au reste du mécanisme de direction du véhicule, tandis que son autre extrémité est adaptée pour recevoir un volant de direction 4, comportant un coussin central 5 de réception d'un sac gonflable 6 d'un module à sac gonflable, associé à un générateur de gaz.

Alors que dans l'état de la technique, l'ensemble du module à sac gonflable, c'est à dire le sac gonflable et le générateur de gaz de gonflage de celui-ci, était disposé dans le coussin central du volant, dans l'ensemble de colonne selon l'invention, le module à sac gonflable est divisé en deux parties, dont l'une comporte le sac gonflable 6 et est disposée dans le coussin central du volant 5 et dont l'autre comporte le générateur de gaz désigné par la référence générale 7 sur cette figure et est logée dans l'ensemble de colonne de direction, à distance du coussin. Ces deux parties du module à sac gonflable sont raccordées l'une à l'autre par l'intermédiaire d'un organe tubulaire de l'ensemble de colonne.

Dans le mode de réalisation représenté sur cette Fig.1, le générateur de gaz 7 qui est par exemple constitué par un générateur de gaz à poudre associé à un détonateur 8, est disposé dans l'arbre de direction 2, par exemple dans la portion de celui-ci située entre les paliers de guidage 9 et 10 de celui-ci dans le corps de colonne de direction.

Un filtre à particules désigné par la référence 11 peut également être disposé dans cet arbre de direction entre le générateur de gaz et le sac gonflable pour éviter toute dégradation du sac par des particules projetées par le générateur à poudre lors de son fonctionnement.

Le détonateur 8 qui est en fait un système de mise à feu du générateur à poudre, est raccordé par des conducteurs électriques désignés de façon générale par la référence 12, s'étendant dans l'arbre de direction, par exemple à des contacts tournants désignés par la référence 13 et portés par l'arbre de direction. Ces contacts tournants permettent le raccordement de ce détonateur au reste des circuits électriques du véhicule, par l'intermédiaire de conducteurs 14.

Le sac gonflable du module est quant à lui raccordé à l'extrémité de l'arbre de direction adaptée pour recevoir le volant.

Ce raccordement peut présenter n'importe quelle structure appropriée.

On conçoit ainsi que l'arbre de direction de l'ensemble de colonne représenté sur la Fig.1, sert d'une part à loger le générateur de gaz et son détonateur et d'autre part, de conduit de raccordement de ce générateur de gaz au module à sac gonflable.

On conçoit alors que cette structure présente un certain nombre d'avantages par rapport aux structures classiques de modules à sac gonflable, dans la mesure où le coussin central du volant ne comporte plus que le sac gonflable qui présente un encombrement et un poids réduits, le générateur de gaz étant disposé dans l'arbre de direction par exemple entre les paliers de guidage de celui-ci dans le corps de colonne.

Ceci permet d'une part une réduction de l'encombrement du coussin et d'autre part une amélioration des performances de l'ensemble de colonne.

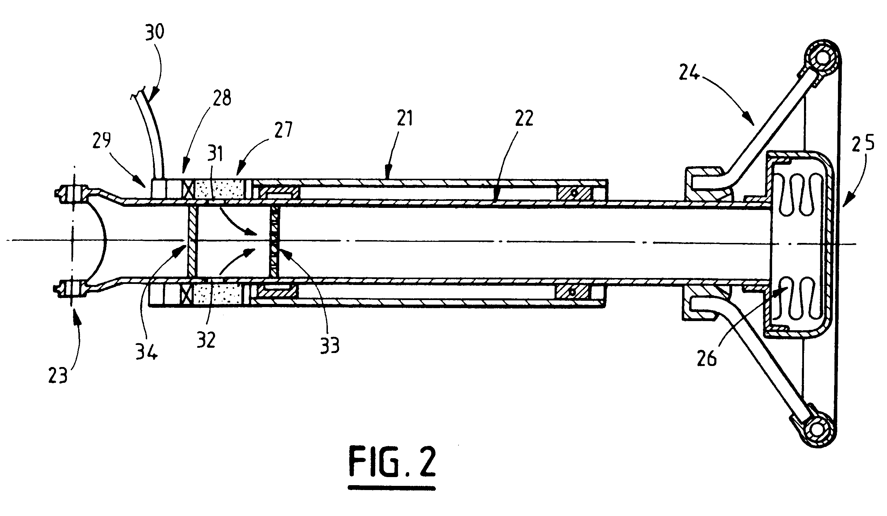

Sur la Fig.2, on a représenté un autre mode de réalisation d'un ensemble de colonne de direction selon l'invention.

Cet ensemble de colonne comporte toujours un corps de colonne de direction 21 dans lequel est disposé un arbre de direction tubulaire 22.

Cet arbre de direction tubulaire est relié à l'une de ses extrémités, en 23, au reste du mécanisme de direction du véhicule et est adapté pour recevoir à son autre extrémité, un volant de direction 24 comportant un coussin central 25 dans lequel est intégré un sac gonflable 26 d'un module à sac gonflable.

Ce sac gonflable est raccordé à une extrémité de l'arbre de direction 22 dont l'autre extrémité porte un générateur de gaz par exemple à poudre 27 associé à un détonateur 28 raccordé par l'intermédiaire de contacts tournants 29 et de conducteurs 30, au reste des circuits électriques du véhicule.

Alors que dans le mode de réalisation représenté sur la Fig.1, le générateur de gaz et le détonateur étaient disposés dans l'arbre de direction, dans le mode de réalisation représenté sur la Fig.2, ce générateur de gaz et ce détonateur sont disposés autour de celui-ci et cet arbre de direction comporte en regard de ce générateur, des trous par exemple 31 et 32 de mise en communication de ce générateur de gaz avec l'intérieur de l'arbre de direction pour assurer le raccordement du générateur au sac gonflable.

Cet arbre de direction comporte également un filtre à particules 33 interposé entre ces trous et le sac gonflable 26 disposé dans le coussin central du volant et un bouchon 34 d'obturation de l'extrémité de l'arbre de direction opposée à celle raccordée au sac, pour diriger les gaz vers le sac gonflable.

Dans les deux modes de réalisation qui viennent d'être décrits, le volant de direction et le coussin central de celui-ci sont portés par l'arbre de direction, de sorte que ce coussin tourne en même temps que l'arbre et le volant.

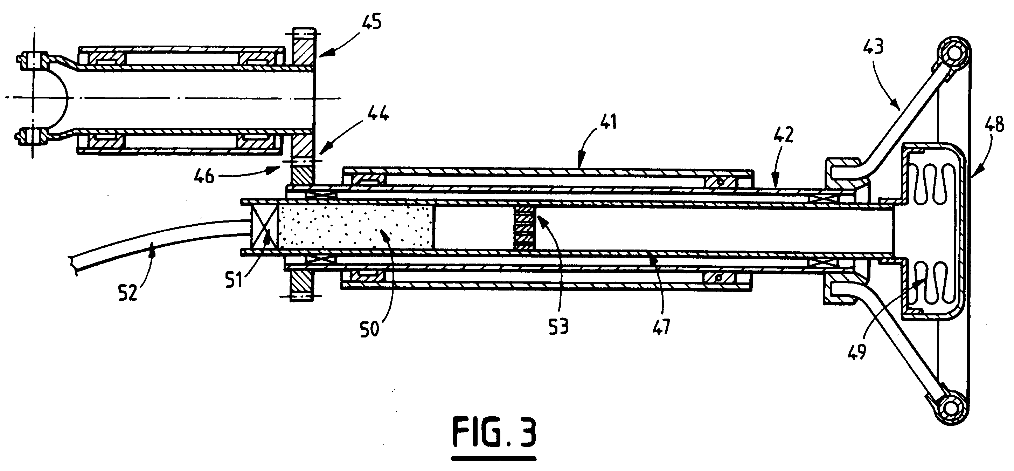

Sur la Fig.3, on a représenté un autre mode de réalisation d'un ensemble selon l'invention dans lequel le coussin central est stationnaire par rapport au volant.

Dans ce mode de réalisation, l'ensemble de colonne comporte toujours un corps de colonne de direction 41 dans lequel est disposé un arbre de direction tubulaire 42.

Cet arbre de direction tubulaire porte à l'une de ses extrémités le volant de direction 43 et est raccordé à son autre extrémité, c'est à dire en 44, au reste du mécanisme de direction 45 du véhicule par l'intermédiaire de moyens à engrenage 46.

Un tube 47 de support du coussin central 48 du volant est disposé dans l'arbre de direction et est fixé en position par rapport au reste de la structure du véhicule, c'est à dire que l'arbre de direction peut tourner autour de ce tube dans le corps de colonne.

On conçoit que lorsqu'un utilisateur fait tourner le volant de direction 43, ceci entraîne une rotation de l'arbre de direction 42 et du reste du mécanisme de direction du véhicule, tandis que le tube de support 47 et le coussin central 48 ne bougent pas.

Ce coussin central est adapté pour recevoir un sac gonflable 49 d'un module à sac gonflable, celui-ci étant raccordé à une extrémité du tube de support de ce coussin, tandis qu'un générateur de gaz 50 associé à un détonateur 51, sont disposés dans ce tube, par exemple à l'autre extrémité de celui-ci.

Le détonateur est raccordé au reste des circuits électriques du véhicule, par l'intermédiaire de conducteurs 52 et un filtre à particules 53 peut également être interposé entre le générateur de gaz 50 et le sac gonflable 49 dans ce tube.

On conçoit alors que dans les différents modes de réalisation qui viennent d'être décrits, le module à sac gonflable est divisé en deux parties, dont l'une comporte le sac gonflable et est disposée dans le coussin central du volant et l'autre comporte le générateur de gaz et est logée dans l'ensemble de colonne de direction, à distance de ce coussin central, les deux parties du module à sac gonflable étant raccordées l'une à l'autre, par l'intermédiaire d'un organe tubulaire de l'ensemble de colonne.

Sur les Fig.1 et 2, cet organe tubulaire est formé par l'arbre de direction du véhicule, celui-ci portant le volant et le coussin central.

Sur la Fig.3, cet organe tubulaire est formé par le tube de support du coussin central du volant, disposé dans l'arbre de direction du véhicule qui porte le volant et ce tube est stationnaire par rapport à cet arbre de direction et ce volant, de sorte que le coussin est fixe lors de la rotation du volant et de l'arbre.

Cette division en deux parties du module à sac gonflable et l'intégration du générateur de gaz dans l'ensemble de colonne permet de réduire l'encombrement et le poids du coussin central du volant dans la mesure où le sac est relativement léger et peu encombrant.

On conçoit alors que la masse totale de l'ensemble volant-coussin en porte-à-faux à l'extrémité de l'arbre de direction est réduite, ce qui permet d'améliorer ses caractéristiques mécanique et esthétique.

Par ailleurs, l'utilisation d'un organe tubulaire de raccordement déjà intégré dans l'ensemble de colonne de direction permet d'obtenir cette structure, de façon simple et économique.

Enfin, il va de soi que le générateur de gaz de gonflage du sac peut être formé par des moyens différents d'un générateur à poudre associé à un détonateur, tel qu'un récipient de gaz sous pression associé à une vanne à pilotage électrique, etc...

## Revendications

1. Ensemble de colonne de direction, notamment pour véhicule automobile, du type comportant un corps de colonne (1;21;41) dans lequel est disposé un arbre tubulaire de direction (2;22;42) dont une extrémité est adaptée pour être reliée au reste du mécanisme de direction du véhicule (3;23;45) et dont l'autre extrémité est adaptée pour recevoir un volant de direction (4;24;43), et un module à sac gonflable comprenant un sac gonflable (6;26;49) disposé dans un coussin central de volant (5;25;48) et associé à un générateur de gaz (7;27;50) de gonflage de ce sac, caractérisé en ce que le module à sac gonflable est divisé en deux parties, dont l'une comporte le sac (6;26;49) et est disposée dans le coussin central et dont l'autre comporte le générateur de gaz (7;27;50) et est logée dans l'ensemble de colonne, à proximité de l'extrémité de celui-ci adaptée pour être reliée au reste du mécanisme de direction du véhicule et en ce que les deux parties du module sont raccordées l'une à l'autre par l'intermédiaire d'un organe tubulaire (2;22;47) de l'ensemble de colonne de direction.

2. Ensemble selon la revendication 1, caractérisé en ce que le volant de direction (4;24) et le coussin central (5;25) sont portés par l'arbre de direction (2;22) et en ce que l'organe tubulaire est formé par l'arbre de direction (2;22).

3. Ensemble selon la revendication 2, caractérisé en ce que le générateur de gaz (7) est disposé dans l'arbre.

4. Ensemble selon la revendication 2, caractérisé en ce que le générateur de gaz (27) est disposé autour de l'arbre et en ce que celui-ci comporte des trous (31,32) de mise en communication de ce générateur et de l'intérieur de l'arbre, cet arbre comportant un bouchon d'obturation (34) à l'extrémité opposée à son extrémité raccordée au sac gonflable (26).

5. Ensemble selon la revendication 1, caractérisé en ce que le coussin central (48) est porté par un tube de support fixe (47), disposé dans l'arbre de direction (42) et en ce que l'organe tubulaire est formé par ce tube de support du coussin.

6. Ensemble selon la revendication 5, caractérisé en ce que le générateur de gaz (50) est disposé dans ce tube de support.

7. Ensemble selon l'une quelconque des revendications précédentes, caractérisé en ce qu'un filtre à particules (11; 33; 53) est interposé dans l'organe tubulaire entre le générateur de gaz et le sac gonflable.

## Claims

1. A steering column assembly, particularly for motor vehicles, of the type comprising a column body (1; 21; 41) in which is arranged a tubular steering shaft (2; 22; 42), one end of which is adapted to be joined to the rest of the steering mechanism of the vehicle (3; 23; 45) and the other end of which is adapted to receive a steering wheel (4; 24; 43), and an air bag module comprising an air bag (6; 26; 49) arranged in a central steering wheel cushion (5; 25; 48) and associated with a gas generator (7; 27; 50) for inflating the bag, characterised in that the air bag module is divided into two parts, one of which comprises the bag (6; 26; 49) and is arranged in the central cushion and the other of which comprises the gas generator (7; 27; 50) and is housed in the column assembly, near the end thereof which has been adapted to be joined to the rest of the vehicle's steering mechanism, and in that the two parts of the module are connected to one another via a tubular element (2; 22; 47) of the steering column assembly.

2. An assembly according to claim 1, characterized in that the steering wheel (4; 24) and the central cushion (5; 25) are supported by the steering shaft (2; 22) and in that the tubular element is formed by the steering shaft (2; 22).

3. An assembly according to claim 2, characterized in that the gas generator (7) is arranged in the shaft.

4. An assembly according to claim 2, characterized in that the gas generator (27) is arranged around the shaft and in that it comprises holes (31, 32) for linking the generator and the inside of the shaft, the shaft comprising a sealing plug (34) at the end opposite its end connected to the air bag (26).

5. An assembly according to claim 1, characterized in that the central cushion (48) is supported by a fixed supporting tube (47) arranged in the steering shaft (42) and in that the tubular element is formed by this cushion-supporting tube.

6. An assembly according to claim 5, characterised in that the gas generator (50) is arranged in the supporting tube.

7. An assembly according to any one of the preceding claims, characterised in that a particle filter (11; 33; 53) is interposed between the gas generator and the air bag in the tubular element.

## Patentansprüche

1. Lenkradanordnung, insbesondere für Kraftfahrzeuge, bestehend aus einem Lenksäulenkörper (1; 21; 41), in dem eine röhrenförmige Lenkspindel (2; 22; 42) angeordnet ist, von der ein Ende derart ausgeführt ist, daß es mit dem übrigen Lenkmechanismus des Fahrzeuges (3; 23; 45) verbunden ist, und das andere Ende derart ausgeführt ist, daß es ein Lenkrad (4; 24; 43) aufnimmt, und einem Airbag-Modul, bestehend aus einem aufblasbaren Beutel (6; 26; 49), der in einem Mittelkissen des Lenkrades (5; 25; 48) angeordnet und mit einem Gaserzeuger (7; 27; 50) zum Aufblasen dieses Beutels verbunden ist, dadurch gekennzeichnet, daß das Airbag-Modul in zwei Teile unterteilt ist, von denen der eine den Beutel (6; 26; 49) umfaßt und in dem Mittelkissen angeordnet ist, und von denen der andere den Gaserzeuger (7; 27; 50) umfaßt und in der Säuleneinheit in der Nähe des Endes derselben angeordnet ist, um mit dem übrigen Lenkmechanismus des Fahrzeugs verbunden zu werden, und daß die beiden Teile des Moduls miteinander durch ein röhrenförmiges Element (2; 22; 47) der Lenkradanordnung verbunden sind.

2. Anordnung nach Anspruch 1, dadurch gekennzeichnet, daß das Lenkrad (4; 24) und das Mittelkissen (5; 25) von der Lenkspindel (2; 22) getragen werden und daß das röhrenförmige Element von der Lenkspindel (2; 22) gebildet wird.

3. Anordnung nach Anspruch 2, dadurch gekennzeichnet, daß der Gaserzeuger (7) in der Spindel angeordnet ist.

4. Anordnung nach Anspruch 2, dadurch gekennzeichnet, daß der Gaserzeuger (27) um die Spindel herum angeordnet ist und daß diese Löcher (31, 32) zur Herstellung einer Verbindung dieses Gaserzeugers mit dem Inneren der Spindel umfaßt, wobei diese Spindel einen Verschlußbolzen (34) an dem Ende umfaßt, das seinem mit dem aufblasbaren Beutel (26) verbundenen Ende gegenüberliegt.

5. Anordnung nach Anspruch 1, dadurch gekennzeichnet, daß das Mittelkissen (48) von einem festen Stützrohr (47) getragen wird, das in der Lenkspindel (42) angeordnet ist, und daß das röhrenförmige Element von diesem Stützrohr des Kissens gebildet wird.

6. Anordnung nach Anspruch 5, dadurch gekennzeichnet, daß der Gaserzeuger (50) in diesem Stützrohr angeordnet ist.

7. Anordnung nach einem der vorhergehenden Ansprüche, dadurch gekennzeichnet, daß ein Teilchenfilter (11; 33; 53) in dem röhrenförmigen Element zwischen dem Gaserzeuger und dem aufblasbaren Beutel angeordnet ist.
